# EUROPEAN PATENT APPLICATION

(11) **EP 4 748 668 A1**
(43) Date of publication of application: **27.05.2026**
(21) Application number: 24853466.1
(22) Date of filing: 16.07.2024
(51) Int. Cl.: B60T 13/74, B60T 17/00, B60R 16/02

(54) **ELECTRO-MECHANICAL BRAKE APPARATUS HAVING MOUNTING SURFACES MATCHED FOR LINE OUTGOING, AND VEHICLE**

(30) Priority: 14.08.2023 CN 202311020639
(71) Applicant: Huawei Digital Power Technologies Co., Ltd., Shenzhen, Guangdong 518043 (CN)
(72) Inventor: LUO, Yuehao, Shenzhen, Guangdong 518043 (CN); HE, Yuhui, Shenzhen, Guangdong 518043 (CN); NI, Hui, Shenzhen, Guangdong 518043 (CN)
(74) Representative: Maiwald GmbH
(86) International application number: PCT/CN2024/105688
(87) International publication number: WO 2025/036054

(57) **Abstract**

This application provides an electro-mechanical brake apparatus whose mounting surfaces cooperate for cabling and a vehicle. The electro-mechanical brake apparatus includes a housing of a driver and a housing of a brake, a transmission component of the brake drives at least one friction plate, the housing of the driver and the housing of the brake each include a mounting surface, the two mounting surfaces are fastened to each other, each mounting surface includes a through hole, the through hole is configured to avoid a transmission connecting member, and the transmission connecting member is configured to enable a transmission component of the driver to be in transmission connection to the transmission component of the brake. At least one mounting surface includes at least one groove, the at least one groove is configured to avoid at least one signal transmission line, and the at least one signal transmission line is electrically connected to a circuit component accommodated in at least one of the housing of the driver or the housing of the brake. In this application, the electro-mechanical brake apparatus uses a cooperation gap between the mounting surfaces of the housings for cabling, to facilitate a layout of the signal transmission line and reduce an overall size of the electro-mechanical brake apparatus.

## Description

### CROSS-REFERENCE TO RELATED APPLICATIONS

This application claims priority to Chinese Patent Application No. 202311020639.1, filed with the China National Intellectual Property Administration on August 14, 2023 and entitled "ELECTRO-MECHANICAL BRAKE APPARATUS WHOSE MOUNTING SURFACES COOPERATE FOR CABLING AND VEHICLE", which is incorporated herein by reference in its entirety.

### TECHNICAL FIELD

This application relates to the field of vehicle technologies, and in particular, to an electro-mechanical brake apparatus whose mounting surfaces cooperate for cabling and a vehicle.

### BACKGROUND

An electro-mechanical brake (electro-mechanical brake, EMB) apparatus uses a motor and a mechanical transmission mechanism to drive a brake to brake. The electro-mechanical brake apparatus features in a simple structure, a sensitive response, stable load transfer, and no hydraulic pipe, and has high transfer efficiency. The electro-mechanical brake apparatus can improve safety, maneuverability, and comfort of a vehicle.

The electro-mechanical brake apparatus is provided with a circuit component for auxiliary control, and the circuit component performs signal transmission through a signal transmission line. A complex internal mechanical transmission structure and narrow internal space of the electro-mechanical brake apparatus are not conducive to a layout of the signal transmission line in the electro-mechanical brake apparatus.

### SUMMARY

This application provides an electro-mechanical brake apparatus whose mounting surfaces cooperate for cabling and a vehicle. A cooperation gap between mounting surfaces of housings in the electro-mechanical brake apparatus is used for cabling, to facilitate a layout of a signal transmission line and reduce an overall size of the electro-mechanical brake apparatus. This application specifically includes the following solutions.

According to a first aspect, this application provides an electro-mechanical brake apparatus whose mounting surfaces cooperate for cabling, where the electro-mechanical brake apparatus includes a housing of a driver and a housing of a brake, the housing of the driver is configured to accommodate a transmission component of the driver, the housing of the brake is configured to accommodate a transmission component of the brake, the transmission component of the brake drives at least one friction plate, the housing of the driver and the housing of the brake each include a mounting surface, and the two mounting surfaces are fastened to each other.

Each mounting surface includes a through hole, the through hole is configured to avoid a transmission connecting member, and the transmission connecting member is configured to enable the transmission component of the driver to be in transmission connection to the transmission component of the brake.

At least one mounting surface includes at least one groove, the at least one groove is configured to avoid at least one signal transmission line, and the at least one signal transmission line is electrically connected to a circuit component accommodated in at least one of the housing of the driver or the housing of the brake.

In this application, the housing of the driver and the housing of the brake in the electro-mechanical brake apparatus are fastened to each other, and the signal transmission line is avoided by using a groove formed through cooperation between the two mounting surfaces, so that a circuit component accommodated in one of the housings may lead out the signal transmission line through a gap between the two mounting surfaces. An extension distance of the signal transmission line inside a housing of the electro-mechanical brake apparatus is short. This facilitates arrangement of internal transmission components of the electro-mechanical brake apparatus and reduces an overall size of the electro-mechanical brake apparatus. In addition, this facilitates arrangement of the signal transmission line outside the housing.

In an implementation, the groove extends in a direction parallel to the mounting surface, and in the extension direction of the groove, the groove includes an inlet end close to the through hole and an outlet end away from the through hole.

The inlet end communicates with the inside of the housing of the driver or the inside of the housing of the brake, and the signal transmission line extends into the groove through the inlet end.

The outlet end is located at an edge of the mounting surface, and the signal transmission line extends out of the mounting surface through the outlet end.

In this implementation, a position that is in the housing and that is used to lead out the signal transmission line is close to a center of the mounting surface. This facilitates sealing protection inside the housing.

In an implementation, the groove extends in a straight-line direction parallel to the mounting surface, and an extension line of a connection line from the outlet end of the groove to the inlet end of the groove passes through a circle center of the through hole.

In this implementation, an extension path of the signal transmission line is short, and is convenient for processing and manufacturing of the groove.

In an implementation, the electro-mechanical brake apparatus includes a sealing member, and the sealing member is filled in a gap between the signal transmission line and the inlet end to seal the housing of the driver or the housing of the brake.

In this implementation, the sealing member may have sealing protection effect on the housing.

In an implementation, there are two grooves, and the two grooves are symmetrically distributed in a vertical direction relative to a circle center of the through hole.

When the electro-mechanical brake apparatus is configured to brake a left wheel of a vehicle, the signal transmission line extends out of the mounting surface through one groove.

When the electro-mechanical brake apparatus is configured to brake a right wheel of the vehicle, the signal transmission line extends out of the mounting surface through the other groove.

In this implementation, the two grooves are symmetrically disposed, so that compatibility and interchangeability of the electro-mechanical brake apparatus can be improved, and the electro-mechanical brake apparatus adapts to both the left wheel and the right wheel of the vehicle.

In an implementation, the housing of the driver is fastened to the housing of the brake through a pair of bolts.

The pair of bolts is symmetrically distributed in a radial direction relative to the circle center of the through hole.

In a circumferential direction of the through hole, one of the pair of bolts is located between the two grooves.

In this implementation, the two housings are fastened through the pair of bolts, and an arrangement direction of the pair of bolts is approximately in the vertical direction, so that a horizontal size of the electro-mechanical brake apparatus can be reduced, and wheel end space can be appropriately used.

In an implementation, one of the two mounting surfaces is provided with two pairs of bolt holes, the two pairs of bolt holes are symmetrically distributed in the vertical direction relative to the circle center of the through hole, and one pair of bolt holes is fastened to the pair of bolts.

When the electro-mechanical brake apparatus is configured to brake the left wheel of the vehicle, the pair of bolts is fastened to one pair of bolt holes.

When the electro-mechanical brake apparatus is configured to brake the right wheel of the vehicle, the pair of bolts is fastened to the other pair of bolt holes.

In this implementation, the two pairs of bolt holes are symmetrically disposed, so that compatibility and interchangeability of the electro-mechanical brake apparatus can be improved, and the electro-mechanical brake apparatus adapts to both the left wheel and the right wheel of the vehicle.

In an implementation, the housing of the brake is configured to accommodate the circuit component, the circuit component includes a pressure sensor, and the pressure sensor is configured to: detect pressure generated when the transmission component of the brake drives the at least one friction plate, and transmit a pressure detection signal through the at least one signal transmission line.

In this implementation, the housing of the brake accommodates the pressure sensor configured to detect brake pressure, and the signal transmission line is configured to transmit a detected signal to the driver to match and adjust an output torque, to ensure stable and reliable braking of the electro-mechanical brake apparatus.

In an implementation, in a length direction of the transmission connecting member, the pressure sensor is arranged on a side that is of the transmission connecting member and that faces the mounting surface of the housing of the brake, and a side that is of the pressure sensor and that faces the mounting surface of the housing of the brake is electrically connected to the at least one signal transmission line.

In this implementation, the pressure sensor is disposed on a side that is of the transmission component of the brake and that is close to the driver, and the signal transmission line is led out from the side to shorten the extension length of the signal transmission line. This facilitates internal space arrangement of the brake.

In an implementation, the driver includes a circuit board, the housing of the driver is configured to accommodate the circuit board, the circuit board is configured to fasten a control circuit, and the control circuit is configured to receive a signal of the pressure sensor.

In this implementation, the transmission component of the driver has a large size, and corresponds to the large housing of the driver, so as to accommodate a structure of the circuit board.

In an implementation, a thickness direction of the circuit board is perpendicular to the mounting surface of the housing of the driver, and the transmission component of the driver is arranged between the circuit board and the mounting surface of the housing of the driver.

In this implementation, the arrangement of the circuit board can reduce the size of the electro-mechanical brake apparatus in a wheel axial direction, to appropriately use the wheel end space. In addition, the circuit board does not affect the transmission connection between the transmission component of the driver and the transmission component of the brake.

In an implementation, the driver includes a brake motor, the housing of the driver is configured to accommodate the brake motor, and the brake motor is configured to drive the transmission component of the driver to rotate.

In a length direction of the transmission connecting member, the brake motor is located on a side that is of the transmission component of the driver and that faces the brake.

In a radial direction of the transmission connecting member, the brake motor and the transmission component of the brake are disposed side by side.

In this implementation, power output by the brake motor is transferred to the friction plate through a "U"-shape path, so that the size of the electro-mechanical brake apparatus in the wheel axial direction is reduced, and the wheel end space is appropriately used.

In an implementation, the transmission component of the driver includes an input shaft and an output shaft that are in transmission connection.

In the radial direction of the transmission connecting member, the input shaft and the output shaft are spaced from each other.

In an axial direction of the input shaft, the input shaft is coaxially transmitted with a motor shaft of the brake motor.

In an axial direction of the output shaft, the output shaft is coaxially transmitted with the transmission connecting member.

In this implementation, the input shaft and the output shaft of the driver are side-by-side and in transmission connection, so that the power output by the brake motor can be transferred in a commutative direction, and a length size of the electro-mechanical brake apparatus can be reduced.

In an implementation, the transmission connecting member and the output shaft are of an integrated structure; or the transmission connecting member and the transmission component of the brake are of an integrated structure.

In this implementation, the transmission connecting member and the output shaft or the rotation input member may form an integrated structure, so that a transmission structure at one end of the transmission connecting member is omitted, and the overall size of the electro-mechanical brake apparatus is further reduced.

According to a second aspect, this application provides a vehicle, including a wheel and the electro-mechanical brake apparatus provided in any one of the foregoing implementations, where a length direction of a transmission connecting member in the electro-mechanical brake apparatus is parallel to a wheel shaft of the wheel.

The vehicle provided in the second aspect of this application is braked by using the electro-mechanical brake apparatus provided in the first aspect of this application. In the electro-mechanical brake apparatus provided in the first aspect of this application, mounting surfaces of housings cooperate for cabling, to reduce an overall size. Therefore, the vehicle in this application can obtain larger internal space.

### BRIEF DESCRIPTION OF DRAWINGS

FIG. 1 is a diagram of an operating scenario of a vehicle according to an embodiment of this application;
FIG. 2 is a diagram of arrangement of an internal structure of an electro-mechanical brake apparatus according to an embodiment of this application;
FIG. 3 is a diagram of an appearance structure of a brake according to an embodiment of this application;
FIG. 4 is a diagram of a cross-sectional structure of the brake according to the embodiment shown in FIG. 3 in this application;
FIG. 5 is a diagram of an appearance structure of an electro-mechanical brake apparatus after a partial structure is hidden according to an embodiment of this application;
FIG. 6 is a diagram of a cross-sectional structure of the electro-mechanical brake apparatus according to the embodiment shown in FIG. 5 in this application;
FIG. 7 is a diagram of a decomposed structure of the electro-mechanical brake apparatus according to the embodiment shown in FIG. 5 in this application;
FIG. 8 is an enlarged diagram of a partial structure of the electro-mechanical brake apparatus according to the embodiment shown in FIG. 7 in this application at a position A;
FIG. 9 is an enlarged diagram of a partial structure of the electro-mechanical brake apparatus according to the embodiment shown in FIG. 7 in this application at a position B;
FIG. 10 is a diagram of an appearance structure of a housing of a brake according to the embodiment shown in FIG. 7 in this application; and
FIG. 11 is a diagram of a cross-sectional structure of a sealing member of an electro-mechanical brake apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

In this specification, sequence numbers, such as "first" and "second", of components are merely intended to distinguish between the described objects, and do not have any sequential or technical meaning. Unless otherwise specified, "connection" in this application includes direct connection and indirect connection. In the descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus whose mounting surfaces cooperate for cabling. The electro-mechanical brake apparatus includes a housing of a driver and a housing of a brake, the housing of the driver and the housing of the brake each are configured to accommodate a transmission component, the transmission component of the brake drives at least one friction plate, the housing of the driver and the housing of the brake each include a mounting surface, the two mounting surfaces are fastened to each other, each mounting surface includes a through hole, the through hole is configured to avoid a transmission connecting member, and the transmission connecting member is configured to enable a transmission component of the driver to be in transmission connection to the transmission component of the brake. At least one mounting surface includes at least one groove, the at least one groove is configured to avoid at least one signal transmission line, and the at least one signal transmission line is electrically connected to a circuit component accommodated in at least one of the housing of the driver or the housing of the brake. In this application, the electro-mechanical brake apparatus uses a cooperation gap between the mounting surfaces of the housings for cabling, to facilitate a layout of the signal transmission line and reduce an overall size of the electro-mechanical brake apparatus.

This application provides a vehicle, and the vehicle includes a wheel and the foregoing electro-mechanical brake apparatus, where a length direction of a transmission connecting member in the electro-mechanical brake apparatus is parallel to a wheel shaft of the wheel. The vehicle uses the electro-mechanical brake apparatus for braking. In the electro-mechanical brake apparatus, mounting surfaces of housings cooperate for cabling, to reduce an overall size. Therefore, the vehicle in this application can obtain larger internal space.

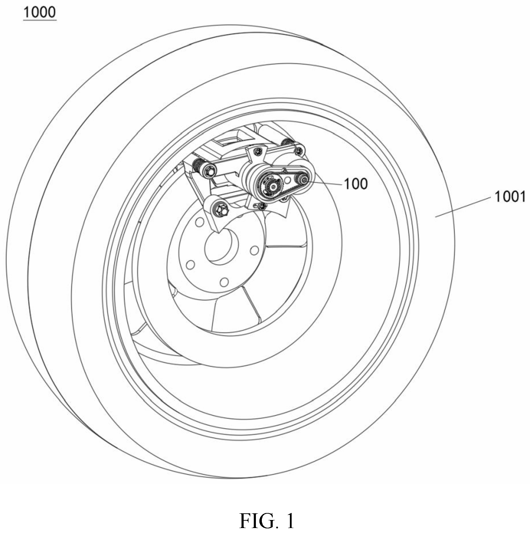

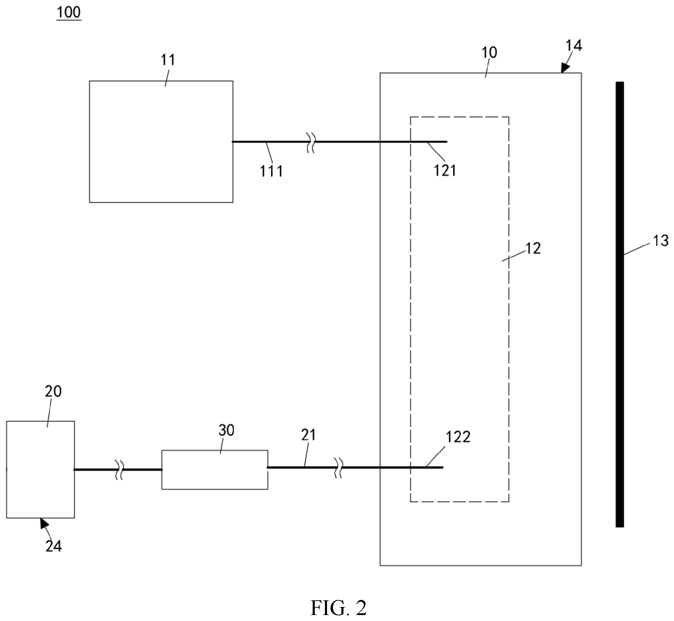

Refer to FIG. 1 and FIG. 2. FIG. 1 is a diagram of a working scenario of a vehicle 1000 according to an embodiment of this application, and FIG. 2 is a diagram of internal structure arrangement of an electro-mechanical brake apparatus 100 according to an embodiment of this application. To clearly show an internal functional structure of the electro-mechanical brake apparatus 100, a structure of a part of a housing in the electro-mechanical brake apparatus 100 is hidden in FIG. 1. As shown in FIG. 1, the vehicle 1000 provided in this embodiment of this application includes a wheel 1001 and the electro-mechanical brake apparatus 100. The electro-mechanical brake apparatus 100 is fastened on a frame of the vehicle 1000, and is disposed at a position corresponding to the wheel 1001. The electro-mechanical brake apparatus 100 is configured to brake the wheel 1001.

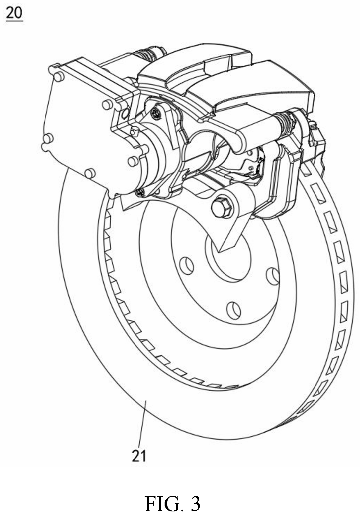

In an embodiment, a brake disc (shown as a brake disc 21 in FIG. 3) is coaxially fastened on the wheel 1001, and the brake disc rotates synchronously with the wheel 1001 in a traveling process of the vehicle 1000. The electro-mechanical brake apparatus 100 is fastened on the frame, and is disposed corresponding to the brake disc. The electro-mechanical brake apparatus 100 comes into contact with the brake disc to generate a friction force to brake the brake disc and indirectly brake the wheel 1001.

It should be noted that, in the embodiment shown in FIG. 1, only one wheel 1001 and one electro-mechanical brake apparatus 100 are used as an example for description. In an actual application scenario, the electro-mechanical brake apparatus 100 may be correspondingly disposed on a part of wheels or each wheel 1001 in the vehicle 1000.

As shown in FIG. 1 and FIG. 2, the electro-mechanical brake apparatus 100 includes a driver 10 and a brake 20. The driver 10 is configured to provide a driving force for the brake 20, and the brake 20 is configured to generate an internal mechanism action after receiving the driving force, to brake the wheel 1001 (namely, the brake disc), so as to brake the vehicle 1000.

The electro-mechanical brake apparatus 100 is further provided with a transmission connecting member 30 between the driver 10 and the brake 20. The transmission connecting member 30 is connected between the driver 10 and the brake 20, and is configured to transmit power of the driver 10 to the brake 20, so that the driver 10 drives the brake 20 to brake the wheel 1001. A length direction of the transmission connecting member 30 is parallel to a wheel shaft of the wheel 1001 (namely, a rotation axis of the brake disc).

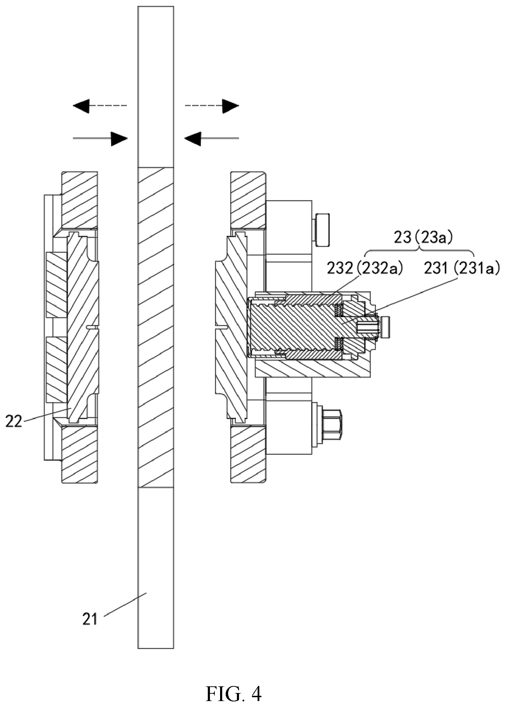

In an embodiment, the driver 10 includes a brake motor 11 and a transmission component 12, and the transmission component 12 of the driver 10 is transmission connection between the brake motor 11 and the transmission connecting member 30. Specifically, the transmission connecting member 30 is transmission connection between the transmission component 12 of the driver 10 and a transmission component of the brake 20 (shown as a transmission component 23 of the brake 20 in FIG. 4). Through the transmission component 12 of the driver 10, the brake motor 11 rotates, to drive the transmission component 23 of the brake 20 to move, so as to brake the wheel 1001 (namely, the brake disc).

In an embodiment, a housing 14 of the driver 10 is configured to accommodate the transmission component 12. The transmission component 12 includes an input shaft 121 and an output shaft 122 that are spaced from each other. The input shaft 121 is transmission connection to the output shaft 122. As shown in FIG. 1, belt transmission is used to implement transmission connection between the input shaft 121 and the output shaft 122 in the transmission component 12 of the driver 10. However, FIG. 1 is merely used to describe a possible manner of transmission between the input shaft 121 and the output shaft 122 in embodiments. A manner of transmission between the input shaft 121 and the output shaft 122 is not limited to the belt transmission shown in FIG. 1. In an embodiment, the housing 14 of the driver 10 may be further configured to accommodate the brake motor 11.

In other words, in another embodiment of this application, the manner of transmission between the input shaft 121 and the output shaft 122 may be but is not limited to gear transmission, chain transmission, belt transmission, or another transmission manner that can implement the transmission connection between the input shaft 121 and the output shaft 122.

In an embodiment, as shown in FIG. 2, in the length direction of the transmission connecting member 30, the brake motor 11 and the brake 20 are located on a same side of the transmission component 12 of the driver 10. In other words, the brake motor 11 is located on a side that is of the transmission component 12 of the driver 10 and that faces the brake 20. In addition, in a radial direction of the transmission connecting member 30, the brake motor 11 and the transmission component of the brake 20 are disposed side by side.

The input shaft 121 and the output shaft 122 are spaced from each other in the radial direction of the transmission connecting member 30, and axial directions of the input shaft 121 and the output shaft 122 are both parallel to the length direction of the transmission connecting member 30. It may be understood that the input shaft 121 and the output shaft 122 in the transmission component 12 of the driver 10 are disposed side by side and in transmission connection, so that power output by the brake motor 11 can be transferred in a commutative direction, and a length size of the electro-mechanical brake apparatus 100 can be reduced.

In an embodiment, in the axial direction of the input shaft 121, a motor shaft 111 of the brake motor 11 is coaxially transmitted with the input shaft 121. In addition, in the axial direction of the output shaft 122, the transmission connecting member 30 is coaxially transmitted with the output shaft 122.

The brake motor 11 is used as a power source and rotates around an axis of the brake motor through the motor shaft 111, to output power to the outside. The motor shaft 111 of the brake motor 11 is coaxially transmitted with the input shaft 121 of the transmission component 12, and the motor shaft 111 rotates to synchronously drive the input shaft 121 to rotate, to input the power to the transmission component 12. The power is input to the transmission component 12 through the input shaft 121, and output by the transmission component 12 from the output shaft 122. The output shaft 122 is coaxially transmitted with the transmission connecting member 30. When the output shaft 122 rotates, the transmission connecting member 30 is synchronously driven to rotate, to transmit the power to the brake 20 through the transmission connecting member 30, so that the driver 10 drives the brake 20 to brake the vehicle 1000.

In other words, a transmission path of the power output by the brake motor 11 in the electro-mechanical brake apparatus 100 may be but is not limited to: the motor shaft 111 of the brake motor 11 → the input shaft 121 → the output shaft 122 → the transmission connecting member 30 → the brake 20, so that the driver 10 can drive the brake 20 to brake.

It may be understood that the power output by the brake motor 11 is transmitted to the transmission connecting member 30 through the transmission component 12 of the driver 10, and is transmitted to the brake 20 through the transmission connecting member 30 to drive the brake 20 to brake, so that the power output by the brake motor 11 is transmitted to a friction plate (shown as a friction plate 22 in FIG. 4) through a "U"-shape path. In other words, a power transmission path of the electro-mechanical brake apparatus 100 is folded in an axial direction of the wheel 1001, so that a size of the electro-mechanical brake apparatus 100 in the axial direction of the wheel 1001 is reduced, and wheel end space of the vehicle 1000 is appropriately used.

It should be noted that, in the embodiment shown in FIG. 2, only a possible arrangement manner of functional structural apparatuses in the electro-mechanical brake apparatus 100 in this application is used as an example for description. However, arrangement and a transmission connection manner of the functional structural apparatuses in the electro-mechanical brake apparatus 100 in this application are not limited thereto. In another embodiment of the electro-mechanical brake apparatus 100 in this application, an arrangement manner and a connection manner of the brake motor 11, the transmission component 12 of the driver 10, the transmission connecting member 30, and the brake 20 may be adjusted based on an actual design requirement and an application scenario. This is not specifically limited in embodiments of this application.

In an embodiment, still refer to FIG. 2. The housing 14 of the driver 10 is configured to accommodate a circuit board 13. In other words, the circuit board 13 is accommodated in the housing 14 of the driver 10. The circuit board 13 is configured to fasten a control circuit, and the control circuit is configured to receive a signal, to coordinate various functional circuits to work in cooperation, so as to implement various functions for braking the vehicle 1000 by the electro-mechanical brake apparatus 100. The transmission component 12 of the driver 10 has a large size, and the housing 14 of the driver 10 is accordingly large, so as to accommodate a structure of the circuit board 13.

In the length direction of the transmission connecting member 30, the circuit board 13 is located on a side that is of the transmission component 12 of the driver 10 and that is away from the brake 20. In other words, in the length direction of the transmission connecting member 30, the circuit board 13 and the brake 20 are arranged on two opposite sides of the transmission component 12 of the driver 10, and the brake 20 is located on a side that is of the transmission component 12 of the driver 10 and that is close to the brake motor 11. The transmission component 12 of the driver 10 is arranged between the circuit board 13 and a mounting surface of the housing 14 of the driver 10. The circuit board 13 does not affect the transmission connection between the transmission component 12 of the driver 10 and the transmission component 23 of the brake 20.

For example, when the control circuit of the circuit board 13 is electrically connected to the brake motor 11 of the driver 10, a power output status of the brake motor 11 can be controlled, to meet different braking requirements of a user for the vehicle 1000.

In an embodiment, a thickness direction of the circuit board 13 is parallel to the length direction of the transmission connecting member 30. In other words, the thickness direction of the circuit board 13 is perpendicular to the mounting surface of the housing 14 of the driver 10. The thickness direction of the circuit board 13 may be understood as a direction in which the circuit board 13 of a plate structure is perpendicular to a plane of the circuit board 13. The thickness direction of the circuit board 13 is set to be parallel to the length direction of the transmission connecting member 30, so that arrangement of the circuit board 13 can be complementary to arrangement of other functional structures in the electro-mechanical brake apparatus 100. In this way, the size of the electro-mechanical brake apparatus 100 in the axial direction of the wheel 1001 can be reduced, and the wheel end space can be appropriately used.

Refer to both FIG. 3 and FIG. 4. FIG. 3 is a diagram of an appearance structure of the brake 20 according to an embodiment of this application. FIG. 4 is a diagram of a cross-sectional structure of the brake 20 according to the embodiment shown in FIG. 3 in this application. To clearly illustrate a braking process of the brake 20, a partial structure of the brake 20 is hidden in the diagram of FIG. 4.

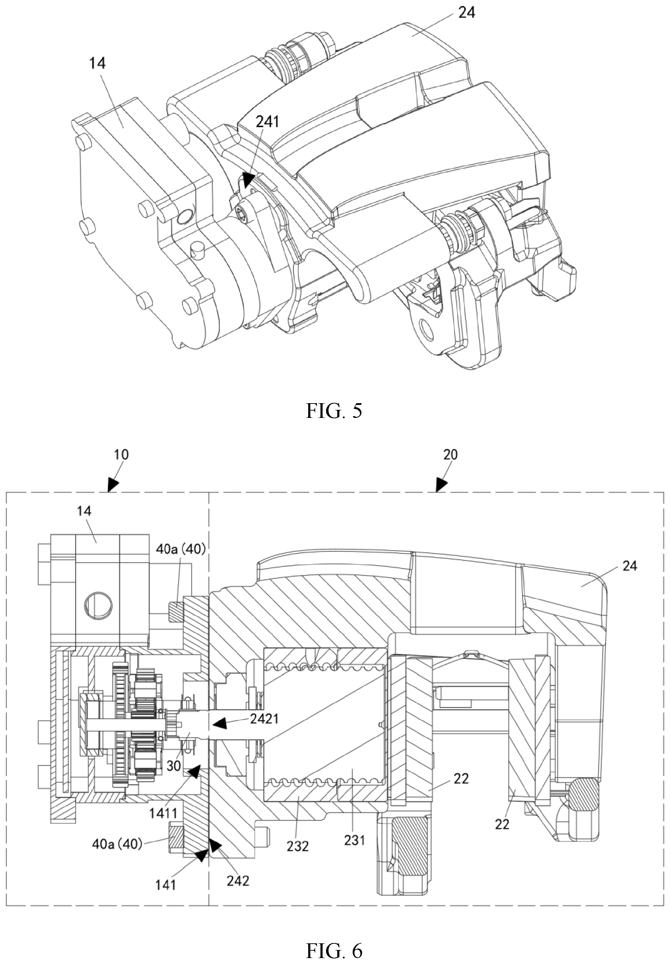

In an embodiment, as shown in FIG. 3 and FIG. 4, the brake 20 includes the friction plate 22 and the transmission component 23. In an embodiment, there are two friction plates 22, one of the two friction plates 22 is slidably connected to the housing 24 of the brake 20 (as shown in FIG. 5), and the other friction plate 22 is fastened to the housing 24 of the brake 20. For the two friction plates 22, the brake motor 11, the transmission component 12 of the driver 10, and the transmission connecting member 30 cooperate with each other, to drive the transmission component 23 of the brake 20 to drive one of the friction plates 22 to slide towards the brake disc 21, so that the two friction plates 22 approach each other.

In an embodiment, the two friction plates 22 are arranged on two opposite sides of the brake disc 21 in a thickness direction of the brake disc 21. The two friction plates 22 may move in a direction of approaching each other (as shown by solid line arrows in FIG. 4) or being away from each other (as shown by dashed line arrows in FIG. 4), so that the two friction plates 22 can abut against the brake disc 21 when the two friction plates 22 approach each other, or the two friction plates 22 release the brake disc 21 when the two friction plates 22 are away from each other. The thickness direction of the brake disc 21 may be understood as the rotation axis of the brake disc 21.

It may be understood that, when the two friction plates 22 approach each other and abut against the brake disc 21, the two friction plates 22 may be respectively in contact with two opposite end faces of the brake disc 21 to form a friction force, so as to reduce a rotation speed of the brake disc 21. Because the brake disc 21 rotates synchronously with the wheel 1001, a decrease of the rotation speed of the brake disc 21 synchronously causes a decrease of a rotation speed of the wheel 1001, to brake the wheel 1001, so as to implement a function of braking the vehicle 1000 by the electro-mechanical brake apparatus 100.

In the example in FIG. 4, in the thickness direction of the brake disc 21, the transmission component 23 of the brake 20 is located on one side of the brake disc 21, and the transmission component 23 of the brake 20 is configured to drive at least one friction plate 22 to move in the thickness direction of the brake disc 21, so that the two friction plates 22 approach each other or move away from each other.

The transmission component 23 of the brake 20 is in transmission connection to the transmission connecting member 30, and is configured to convert a rotation motion of the transmission connecting member 30 into a displacement motion moving in the thickness direction of the brake disc 21, to drive the at least one friction plate 22 to move in the thickness direction of the brake disc 21. As shown in FIG. 4, the thickness direction of the brake disc 21 is parallel to the length direction of the transmission connecting member 30. Therefore, it may also be understood that the transmission component 23 of the brake 20 may convert the rotation motion of the transmission connecting member 30 into a motion in the length direction of the transmission connecting member 30.

In an embodiment, the transmission component 23 of the brake 20 includes a rotation input member 231 and a sliding output member 232. The transmission component 23 of the brake 20 is configured to convert a rotation motion of the rotation input member 231 into a displacement motion of the sliding output member 232, to drive the at least one friction plate 22.

The rotation input member 231 is in transmission connection between the sliding output member 232 and the transmission connecting member 30. The transmission component 23 of the driver 10 is coaxially driven with the rotation input member 231 through the transmission connecting member 30. In other words, the rotation input member 231 coaxially rotates with the transmission connecting member 30.

The sliding output member 232 is in transmission connection between the rotation input member 231 and the at least one friction plate 22, and a displacement direction of the sliding output member 232 is parallel to the length direction of the transmission connecting member 30.

It may be understood that the transmission connecting member 30 rotates around an axis of the transmission connecting member 30, and drives the rotation input member 231 that is in coaxial transmission connection to the transmission connecting member 30 to rotate synchronously, so as to input, to the transmission component 23 of the brake 20 through the rotation input member 231, a power input output by the driver 10. The rotation input member 231 rotates around an axis of the rotation input member 231, and synchronously drives the sliding output member 232 to move, to transmit, to the sliding output member 232, power input by the transmission connecting member 30 to the transmission component 23 of the brake 20, and drive, through the sliding output member 232, the at least one friction plate 22 to move in the thickness direction of the brake disc 21, so as to implement a function of braking the vehicle 1000 by the brake 20.

For example, in the diagram of FIG. 4, the transmission component 23 of the brake 20 may be but is not limited to a ball screw 23a, and the ball screw 23a converts a rotation motion input by the transmission connecting member 30 into a linear displacement motion that drives the friction plate 22 to move. In an embodiment, the ball screw 23a includes a screw 231a and a screw nut 232a that are engaged with each other, the screw 231a is constructed as the rotation input member 231, and the screw nut 232a is constructed as the sliding output member 232.

The screw 231a is coaxially transmitted with the transmission connecting member 30, and the screw nut 232a is configured to push the friction plate 22 to move in the length direction of the transmission connecting member 30 and abut against the brake disc 21 to brake the vehicle 1000.

Because the screw 231a is engaged with the screw nut 232a for transmission, when the screw 231a is driven by the transmission connecting member 30 to rotate along a rotation axis of the screw 231a, a rotation action of the screw 231a is transferred to the screw nut 232a, so that the screw nut 232a can be driven to form an action of displacement in a length direction of the screw 231a.

The screw nut 232a is displaced towards the brake disc 21 in the thickness direction of the brake disc 21, and drives the friction plate 22 to be displaced towards the brake disc 21 in the thickness direction of the brake disc 21, so that the friction plate 22 can be in contact with an end face of the brake disc 21 and form a friction force, to brake the brake disc 21.

It may be understood that the ball screw 23a has high transmission precision and a small friction loss, and can improve transmission efficiency and transmission reliability of the electro-mechanical brake apparatus 100 in this application through cooperation with the transmission connecting member 30.

It should be noted that, in the diagram of FIG. 4, only a possible embodiment of the transmission component 23 of the brake 20 is used as an example for description. However, a possible implementation of the transmission component 23 of the brake 20 in this application is not limited thereto. In another embodiment of this application, the transmission component 23 of the brake 20 may alternatively be another structural member or structural apparatus that can convert the rotation motion input by the transmission connecting member 30 into the linear motion. This is not specifically limited in embodiments of this application.

In an embodiment, the transmission connecting member 30 and the transmission component 23 (specifically, the rotation input member 231) of the brake 20 are of an integrated structure.

In an embodiment, the transmission connecting member 30 and the transmission component 12 (specifically, the output shaft 122) of the driver 10 are of an integrated structure.

It may be understood that the transmission connecting member 30 is in transmission connection between the output shaft 122 of the transmission component 12 of the driver 10 and the rotation input member 231. When the transmission connecting member 30 and the output shaft 122 are constructed as an integrated structure, or the transmission connecting member 30 and the rotation input member 231 are constructed as an integrated structure, a transmission structure at one end of the transmission connecting member 30 can be omitted, and an overall size of the electro-mechanical brake apparatus 100 can be further reduced.

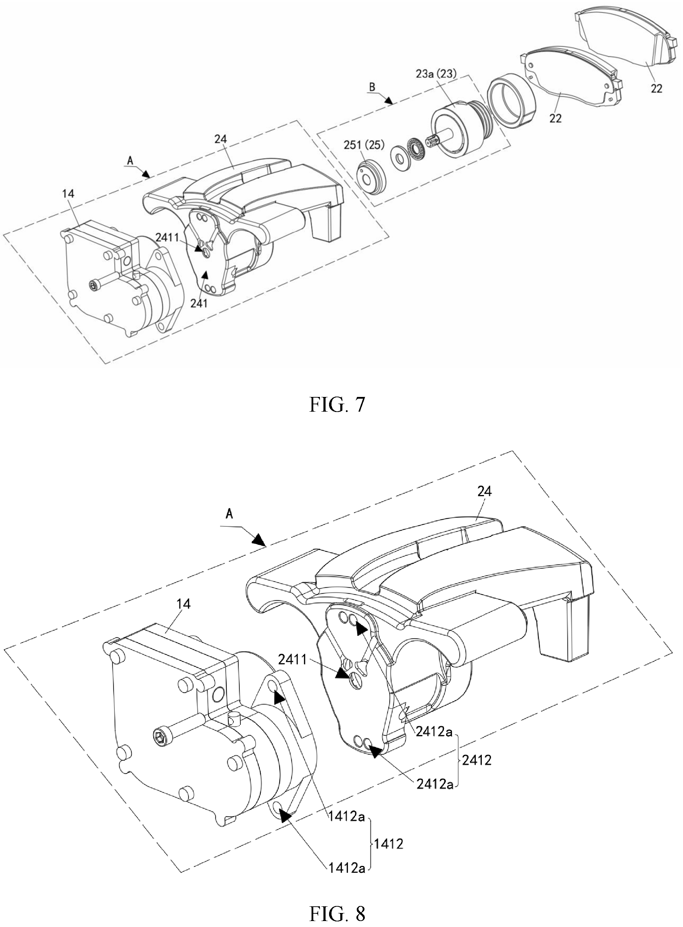

Refer to FIG. 5 to FIG. 7. FIG. 5 is a diagram of an appearance structure of the electro-mechanical brake apparatus 100 after a partial structure is hidden according to an embodiment of this application. FIG. 6 is a diagram of a cross-sectional structure of the electro-mechanical brake apparatus 100 according to the embodiment shown in FIG. 5 in this application. FIG. 7 is a diagram of a decomposed structure of the electro-mechanical brake apparatus 100 according to the embodiment shown in FIG. 5 in this application. To clearly show the structure of the electro-mechanical brake apparatus 100 in this application, a partial structure like the brake disc 21 is hidden in the diagrams of FIG. 5 to FIG. 7.

As shown in FIG. 5 to FIG. 7, the transmission component 12 of the driver 10 is accommodated in the housing 14 of the driver 10, and the transmission component 23 of the brake 20 is accommodated in the housing 24 of the brake 20.

In an embodiment, the housing 14 of the driver 10 is configured to accommodate the transmission component 12 of the driver 10, and the housing 24 of the brake 20 is configured to accommodate the transmission component 23 of the brake 20. The housings are disposed to respectively accommodate the transmission component 12 of the driver 10 and the transmission component 23 of the brake 20, so that the transmission component 12 of the driver 10 and the transmission component 23 of the brake 20 can be separately supported and fastened to ensure normal working of the driver 10 and the brake 20, and the transmission component 12 of the driver 10 and the transmission component 23 of the brake 20 can be further protected, to prevent dust, impurities, and the like in an external environment from intruding the driver 10 or the brake 20 and affecting working performance and a service life.

The housing 14 of the driver 10 and the housing 24 of the brake 20 each include a mounting surface, and the two mounting surfaces are fastened to each other.

In an embodiment, in the diagrams of FIG. 5 to FIG. 7, the mounting surface of the housing 14 of the driver 10 is schematically a first mounting surface 141, and the mounting surface of the housing 24 of the brake 20 is schematically a second mounting surface 241. The first mounting surface 141 and the second mounting surface 241 are fastened to each other, so that the housing 14 of the driver 10 and the housing 24 of the brake 20 are fastened to each other, and therefore the driver 10 and the brake 20 are fastened to each other.

In addition, the driver 10 and the brake 20 are fastened to each other through the two mounting surfaces, so that the housing 14 of the driver 10 and the housing 24 of the brake 20 can be closely attached and a gap is small. In this way, occupied sizes of the driver 10 and the brake 20 can be reduced, and the size of the electro-mechanical brake apparatus 100 in this application can be further reduced, to implement a miniaturization design.

The first mounting surface 141 is provided with a through hole, and the through hole provided on the first mounting surface 141 in FIG. 5 to FIG. 7 is a first through hole 1411. A through hole is provided on the second mounting surface 241 at a position corresponding to the first through hole 1411, and the through hole provided on the second mounting surface 241 in FIG. 5 to FIG. 7 is a second through hole 2411. The two through holes are jointly configured to avoid the transmission connecting member 30 between the transmission component 12 of the driver 10 and the transmission component 23 of the brake 20.

It may be understood that, because the transmission connecting member 30 is disposed to be in transmission connection between the transmission component 12 of the driver 10 and the transmission component 23 of the brake 20, to transmit power output by the brake motor 11 of the driver 10 to the transmission component 23 of the brake 20, two opposite ends of the transmission connecting member 30 need to respectively extend into the housing 14 of the driver 10 and the housing 24 of the brake 20 in the length direction of the transmission connecting member 30, so that the transmission connecting member 30 is in transmission connection to the transmission component 12 of the driver 10 and the transmission component 23 of the brake 20 separately.

In addition, the first mounting surface 141 is provided with the first through hole 1411, the second mounting surface 241 is provided with the second through hole 2411, and the first through hole 1411 and the second through hole 2411 are disposed to be aligned in the length direction of the transmission connecting member 30, so that the two ends of the transmission connecting member 30 that are opposite to each other in the length direction of the transmission connecting member 30 can pass through the first through hole 1411 and the second through hole 2411, to respectively extend into the housing 14 of the driver 10 and the housing 24 of the brake 20.

The housing 14 of the driver 10 may be fastened to the housing 24 of the brake 20 through a bolt 40.

For example, the housing 14 of the driver 10 is fastened to the housing 24 of the brake 20 through a pair of bolts 40, and the pair of bolts 40 is symmetrically distributed in a radial direction relative to a circle center of the through hole, to ensure a force balance between the two mounting surfaces.

As shown in FIG. 6, the pair of bolts 40 includes two bolts 40a, and the two bolts 40a may be symmetrically arranged in a radial direction of the first through hole 1411 or the second through hole 2411 relative to a circle center of the first through hole 1411 or the second through hole 2411, to implement a fixed connection between the housing 14 of the driver 10 and the housing 24 of the brake 20 at different positions.

In addition, the two bolts 40a in the pair of bolts 40 are symmetrically arranged with respect to the through hole, so that stability of the fixed connection between the housing 14 of the driver 10 and the housing 24 of the brake 20 can be improved, and it can be ensured that a functional member inside the driver 10 and a functional member inside the brake 20 can work stably.

In an implementation, the housing 14 of the driver 10 is fastened to the housing 24 of the brake 20 through a pair of bolts 40, and an arrangement direction of the pair of bolts 40 is roughly a vertical direction. It may be understood that, the two bolts 40a in the pair of bolts 40 are arranged roughly in the vertical direction and symmetrically relative to the circle center of the first through hole 1411 or the second through hole 2411, so that the two bolts 40a are respectively fastened on the top and the bottom of the two housings, to further improve stability and reliability of the fixed connection between the driver 10 and the brake 20.

In addition, the two housings are fastened to each other through the pair of bolts 40, and the arrangement direction of the pair of bolts 40 is roughly the vertical direction, so that a horizontal size of the electro-mechanical brake apparatus 100 can be reduced, and there is no need to additionally add structural positions for installing the two bolts 40a in a horizontal direction, to reduce sizes of the two housings in the horizontal direction, so as to appropriately use the wheel end space.

In an embodiment, one of the two mounting surfaces is provided with two pairs of bolt holes, the two pairs of bolt holes are symmetrically distributed in the vertical direction relative to the circle center of the through hole, and one pair of bolt holes is fastened to the pair of bolts 40.

For example, refer to FIG. 8. FIG. 8 is an enlarged diagram of a partial structure of the electro-mechanical brake apparatus 100 according to the embodiment shown in FIG. 7 in this application at a position A. As shown in FIG. 8, the second mounting surface 241 is provided with two pairs of second bolt holes 2412, and the two pairs of second bolt holes 2412 are symmetrically distributed in the vertical direction relative to the circle center of the second through hole 2411.

It may also be understood that, each pair of second bolt holes 2412 includes two second bolt holes 2412a, the two second bolt holes 2412a are spaced from each other in the vertical direction, and the two second bolt holes 2412a are symmetrically disposed with respect to the circle center of the second through hole 2411. In addition, two second bolt holes 2412a that are located on a same side of the second through hole 2411 in the vertical direction are also symmetrically arranged with respect to the circle center of the second through hole 2411 in the horizontal direction. Alternatively, it may also be understood that the four second bolt holes 2412a in the two pairs of second bolt holes 2412 are symmetrically arranged in a pairwise manner with respect to the second through hole 2411 in both the horizontal direction and the vertical direction.

In addition, the first mounting surface 141 is provided with at least one pair of first bolt holes 1412 at a position corresponding to any pair of second bolt holes 2412 on the second mounting surface 241. Two first bolt holes 1412a in the pair of first bolt holes 1412 are respectively disposed corresponding to two second bolt holes 2412a in the pair of second bolt holes 2412.

In an embodiment, an axis of the first bolt hole 1412a coincides with an axis of one second bolt hole 2412a.

In an embodiment, axes of the first bolt hole 1412a and the corresponding second bolt hole 2412a coincide with a rotation axis of the transmission connecting member 30.

In an embodiment, the first bolt hole 1412a and the corresponding second bolt hole 2412a are of a same shape and have an equal area.

It may be understood that, the pair of first bolt holes 1412 on the first mounting surface 141 corresponds to the pair of second bolt holes 2412 on the second mounting surface 241, so that the pair of bolts 40 can pass through the pair of first bolt holes 1412 and the corresponding second bolt holes 2412 in the length direction of the transmission connecting member 30, and the pair of bolts 40 can implement a fastening function, to fasten the housing 14 of the driver 10 to the housing 24 of the brake 20. In other words, the housing 14 of the driver 10 is fastened to the housing 24 of the brake 20.

It should be noted that, in the diagram of FIG. 8, each first bolt hole 1412a and each second bolt hole 2412a may have a same structural shape, structural size, and the like, so that adaptation between each pair of first bolt holes 1412 and any pair of second bolt holes 2412 can be improved. In this way, when the electro-mechanical brake apparatus 100 in this application is correspondingly disposed on wheels 1001 at different positions, the housing 14 of the driver 10 can be fastened to the housing 24 of the brake 20. In addition, a function of braking a wheel 1001 at a corresponding position can be implemented. In other words, compatibility of the electro-mechanical brake apparatus 100 in this application is improved, and interchangeability between wheels 1001 at different positions is improved.

However, in embodiments of this application, each first bolt hole 1412a and each second bolt hole 2412a are not limited to a same structural shape, structural size, and the like. In another embodiment of this application, structural shapes, structural sizes, and the like of the first bolt holes 1412a and the second bolt holes 2412a may be adjusted based on an actual design requirement and application scenario. This is not specifically limited in embodiments of this application.

In addition, in the diagram of FIG. 8, an example in which the first mounting surface 141 is provided with one pair of first bolt holes 1412 and the second mounting surface 241 is provided with two pairs of second bolt holes 2412 is used for description, but a quantity of pairs of bolt holes disposed on each mounting surface is not limited thereto. In other words, in another embodiment of this application, the quantity of pairs of bolt holes disposed on each mounting surface may be adjusted based on an actual design requirement and application scenario. As an example instead of a limitation, the first mounting surface 141 may be provided with two pairs of first bolt holes 1412, and the second mounting surface 241 may be provided with one pair of second bolt holes 2412.

In an embodiment, when the electro-mechanical brake apparatus 100 is configured to brake a left wheel of the vehicle 1000, the pair of bolts 40 is fastened to one pair of bolt holes.

In an embodiment, when the electro-mechanical brake apparatus 100 is configured to brake a right wheel of the vehicle 1000, the pair of bolts 40 is fastened to the other pair of bolt holes.

It may be understood that, the two pairs of bolt holes are symmetrically disposed, so that compatibility and interchangeability of the electro-mechanical brake apparatus 100 can be improved, and the electro-mechanical brake apparatus 100 adapts to both the left wheel and the right wheel of the vehicle 1000.

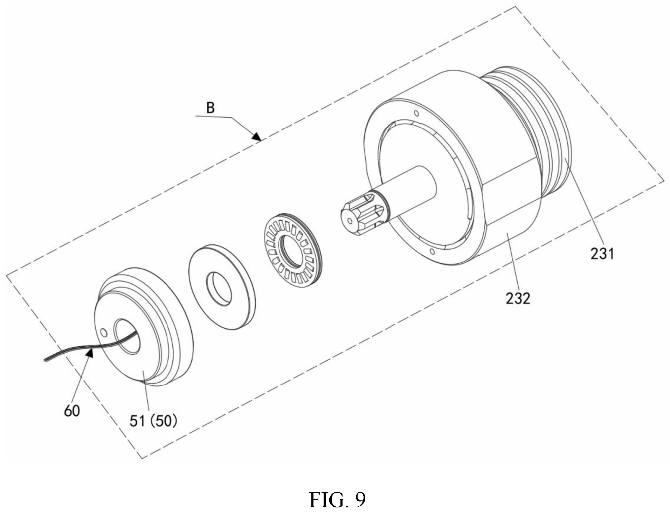

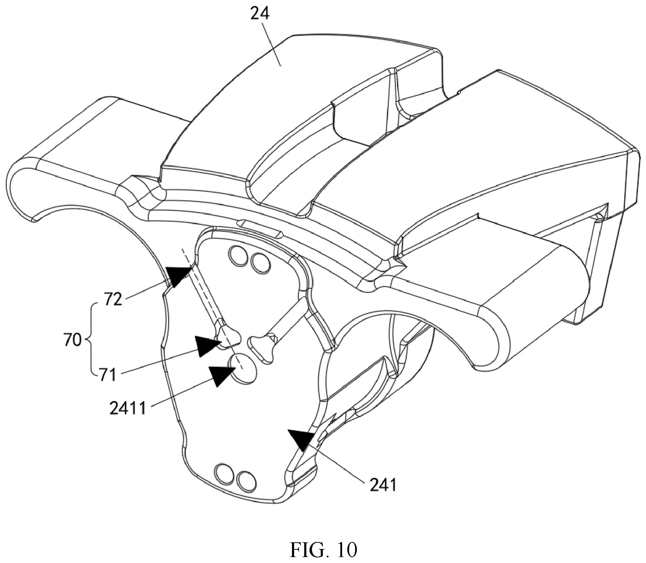

Refer to FIG. 7, FIG. 9, and FIG. 10. FIG. 9 is an enlarged diagram of a partial structure of the electro-mechanical brake apparatus 100 at a position B according to the embodiment shown in FIG. 7 in this application. FIG. 10 is a diagram of an appearance structure of a side view of the housing 24 of the brake 20 according to the embodiment shown in FIG. 7 in this application. A circuit component 50 is disposed in the housing 14 of the driver 10 or the housing 24 of the brake 20. The circuit component 50 may be electrically connected to the circuit board 13 accommodated in the housing 14 of the driver 10, to implement signal transmission between the circuit board 13 and the circuit component 50.

For example, the circuit component 50 may be electrically connected to the circuit board 13 through a signal transmission line 60, but is not limited thereto. To be specific, the signal transmission line 60 may be disposed between the circuit component 50 and the circuit board 13, and two ends of the signal transmission line 60 are electrically connected to the circuit component 50 and the control circuit of the circuit board 13 respectively, to implement a function of signal transmission between the circuit component 50 and the control circuit of the circuit board 13.

For example, as shown in FIG. 7 and FIG. 9, the housing 24 of the brake 20 is configured to accommodate the circuit component 50. The circuit component 50 may include but is not limited to a pressure sensor 51. The pressure sensor 51 is configured to: detect pressure generated when the transmission component 23 of the brake 20 drives the at least one friction plate 22, and transmit a pressure detection signal through at least one signal transmission line 60. In this case, the control circuit on the circuit board 13 is configured to receive the signal of the pressure sensor 51.

In an embodiment, the pressure sensor 51 is accommodated in the housing 24 of the brake 20, and in the length direction of the transmission connecting member 30, the pressure sensor 51 and the at least one friction plate 22 are arranged on two sides of the transmission component 23 of the brake 20.

In the diagram of FIG. 9, in the length direction of the transmission connecting member 30 or in an axial direction of the transmission component 23 of the brake 20, the pressure sensor 51 and the two friction plates 22 are respectively located on two opposite sides of the transmission component 23 of the brake 20, and the pressure sensor 51 is located on a side that is of the transmission component 23 of the brake 20 and that is close to the driver 10. In other words, the pressure sensor 51 is arranged on a side that is of the transmission connecting member 30 and that faces the mounting surface (the second mounting surface 241) of the housing 24 of the brake 20. The driver 10 is electrically connected to the pressure sensor 51 through the signal transmission line 60, and the driver 10 is configured to receive the pressure detected by the pressure sensor 51, to adjust an output torque.

To be specific, one end of the signal transmission line 60 extends into the housing 14 of the driver 10 and is electrically connected to the control circuit on the circuit board 13 accommodated in the housing 14 of the driver 10, and the other end of the signal transmission line 60 extends into the housing 24 of the brake 20 and is electrically connected to the pressure sensor 51, to implement signal transmission between the circuit board 13 and the pressure sensor 51. When the brake motor 11 of the driver 10 drives the transmission component 23 of the brake 20 to drive the at least one friction plate 22, the pressure sensor 51 detects pressure applied by the transmission component 23 of the brake 20 to the friction plate 22, and transmits a detected pressure value to the circuit board 13 of the driver 10 through the signal transmission line 60. The circuit board 13 receives the pressure value detected by the pressure sensor 51, and controls the rotation speed of the brake motor 11 based on the obtained pressure value, to adjust the output torque of the driver 10.

It may be understood that, the pressure sensor 51 is disposed, and the pressure sensor 51 is electrically connected to the driver 10 to detect, in real time, braking pressure applied by the brake 20 to the friction plate 22, so that a status of braking the vehicle 1000 by the electro-mechanical brake apparatus 100 in this application can be mastered in real time. When the electro-mechanical brake apparatus 100 brakes the vehicle 1000 to meet a braking requirement of the user, the output torque of the driver 10 can be further matched and adjusted, to ensure stable and reliable braking of the electro-mechanical brake apparatus 100. The pressure sensor 51 is disposed on a side that is of the transmission component 23 of the brake 20 and that is close to the driver 10, so that an extension length of the signal transmission line 60 can be shortened, to facilitate internal space arrangement of the brake 20.

In an embodiment, the signal transmission line 60 is led out from a side that is of the pressure sensor 51 and that is away from the at least one friction plate 22. In other words, a side that is of the pressure sensor 51 and that faces the mounting surface (the second mounting surface 241) of the housing 24 of the brake 20 is electrically connected the at least one signal transmission line 60.

It may be understood that the signal transmission line 60 is led out from the side that is of the pressure sensor 51 and that is away from the at least one friction plate 22 to be electrically connected to the driver 10, so that the extension length of the signal transmission line 60 can be further shortened, and the signal transmission line 60 is easily led out from the mounting surface. In addition, an arrangement design of the signal transmission line 60 in the housing 14 of the driver 10 and the housing 24 of the brake 20 can be simplified, to avoid a case in which a spatial structure in the two housings is complex because the signal transmission line 60 is excessively long and a cabling design in the two housings is excessively complex. In addition, the extension length of the signal transmission line 60 is shortened as much as possible to simplify the cabling design of the signal transmission line 60 in the two housings, so that connection stability and signal transmission reliability of the signal transmission line 60 can be improved.

It should be noted that, in the diagram of FIG. 9, only a possible cabling design of the signal transmission line 60 is used as an example for description, but an actual structural shape, structural size, cabling design, and the like of the signal transmission line 60 are not limited thereto. In embodiments of this application, the actual structural shape, structural size, cabling design, and the like of the signal transmission line 60 are all adjusted based on an actual design requirement.

In an embodiment, at least one mounting surface includes at least one groove 70, the at least one groove 70 is configured to avoid the at least one signal transmission line 60, and the at least one signal transmission line 60 is electrically connected to the circuit component 50 accommodated in at least one of the housing 14 of the driver 10 or the housing 24 of the brake 20.

In the specification of this application, an example in which the at least one groove 70 is disposed on the second mounting surface 241 is used for description.

In an embodiment, in the diagrams of FIG. 7 and FIG. 10, the second mounting surface 241 is provided with at least one groove 70, and each groove 70 extends in a direction parallel to the second mounting surface 241, that is, an extension direction of the groove 70 is parallel to a plane direction of the mounting surface on which the groove 70 is located. The groove 70 includes an inlet end 71 and an outlet end 72 that are opposite to each other. In the extension direction of the groove 70, the inlet end 71 is located on a side that is of the groove 70 and that is close to the second through hole 2411, and the outlet end 72 is located on a side that is of the groove 70 and that is away from the second through hole 2411.

The inlet end 71 communicates with the inside of the housing 14 of the driver 10 or the inside of the housing 24 of the brake 20. In the diagrams of FIG. 7 to FIG. 10, the inlet end 71 communicates with the inside of the housing 24 of the brake 20. When the signal transmission line 60 is led out from the pressure sensor 51, the signal transmission line 60 can extend out of the housing 24 of the brake 20 from the inlet end 71 of the groove 70 and extend into the groove 70.

The outlet end 72 is located at an edge of the mounting surface, and the signal transmission line 60 extending into the groove 70 extends out of the mounting surface from the outlet end 72. In the diagrams of FIG. 7 and FIG. 10, the outlet end 72 is located at the edge of the second mounting surface 241, and the signal transmission line 60 extends out of the mounting surface from the outlet end 72.

In an embodiment, that the second through hole 2411 is close to the center of the second mounting surface 241 may also be understood as that the circle center of the second through hole 2411 may overlap a geometric center of the second mounting surface 241 or may be close to a geometric center of the second mounting surface 241.

It may be understood that, when the second through hole 2411 is disposed close to the center of the second mounting surface 241, because the inlet end 71 of the groove 70 is close to the second through hole 2411, the inlet end 71 of the groove 70 is also close to the center of the second mounting surface 241, so that when the electro-mechanical brake apparatus 100 corresponds to the wheels 1001 at different positions, distances between outlet ends 72 located at the edge of the second mounting surface 241 and inlet ends 71 are roughly equal or slightly different, and the signal transmission line 60 can extend out of the second mounting surface 241 at a short distance, to further improve compatibility and adaptability of the electro-mechanical brake apparatus 100. In addition, disposing the inlet end 71 of the groove 70 to be close to the center of the second mounting surface 241 further facilitates sealing protection inside the housing 24 of the brake 20.

In an embodiment, the groove 70 extends in a straight-line direction parallel to the mounting surface, and an extension line of a connection line from the outlet end 72 of the groove 70 to the inlet end 71 of the groove 70 passes through the circle center of the through hole.

For example, as shown in FIG. 10, in the plane direction of the second mounting surface 241, an extension shape of the groove 70 is a straight line, and the extension line of the connection line from the outlet end 72 of the groove 70 to the inlet end 71 of the groove 70 passes through the circle center of the second through hole 2411. In other words, in the plane direction of the second mounting surface 241, the groove 70 extends in a radial direction of the second through hole 2411.

It may be understood that, when the extension shape of the groove 70 is set to the straight line, processing and manufacturing of the groove 70 on the mounting surface of the housing can be simplified and facilitated, to reduce manufacturing difficulty and a precision requirement of the groove 70, so as to reduce manufacturing costs. In addition, because a straight line between two points is the shortest, setting the extension shape of the groove 70 to the straight line can further shorten an extension path of the signal transmission line 60 on the mounting surface.

In an embodiment, there are two grooves 70, and the two grooves 70 are symmetrically distributed in the vertical direction relative to the circle center of the through hole.

For example, as shown in FIG. 10, the second mounting surface 241 is provided with two grooves 70, and the two grooves 70 are symmetrically distributed in the vertical direction relative to the circle center of the second through hole 2411. In other words, the two grooves 70 are symmetrical in the vertical direction, and at any horizontal height, distances between the two grooves 70 and the center of the second through hole 2411 are equal.

The two grooves 70 are symmetrically disposed, so that compatibility and interchangeability of the electro-mechanical brake apparatus 100 can be improved, and the electro-mechanical brake apparatus 100 can adapt to wheels 1001 at different positions of the vehicle 1000, for example, the left wheel and the right wheel of the vehicle 1000.

For example, when the electro-mechanical brake apparatus 100 is configured to brake the left wheel of the vehicle 1000, the signal transmission line 60 extends out of the mounting surface through one groove 70.

For example, when the electro-mechanical brake apparatus 100 is configured to brake the right wheel of the vehicle 1000, the signal transmission line 60 extends out of the mounting surface through the other groove 70.

In an embodiment, in a circumferential direction of the through hole, one bolt 40a in the pair of bolts 40 is located between the two grooves 70.

It should be noted that, in the examples in FIG. 7 and FIG. 10, only an example in which the groove 70 is disposed on the mounting surface of the housing 24 of the brake 20 is used for description, but the groove 70 is not limited to being disposed only on the second mounting surface 241. In another embodiment of this application, the groove 70 may alternatively be disposed on the mounting surface of the housing 14 of the driver 10, that is, disposed on the first mounting surface 141. In the solution of this application, the groove 70 may be explained as a cooperation gap between two mounting surfaces. Whether the groove 70 is specifically disposed on the mounting surface of the housing 24 of the brake 20 or the mounting surface of the housing 14 of the driver 10 may be adjusted based on an actual design requirement, a usage scenario of the electro-mechanical brake apparatus 100, or the like. This is not specifically limited in embodiments of this application.

For example, in a possible embodiment, a part of a structure of the groove 70 may be formed on the second mounting surface 241, and the other part of the structure of the groove 70 is correspondingly formed at a corresponding position on the first mounting surface 141. The two parts of structures on the two mounting surfaces are aligned with each other, to cooperate to form the groove 70 and avoid the signal transmission line 60.

In addition, in the examples in FIG. 7 and FIG. 10, only an example in which there are two grooves 70 is used for description. However, this is no limitation that there can be only two grooves 70 in embodiments of this application. In embodiments of this application, a quantity of grooves 70 disposed on the mounting surface may be adjusted based on an actual cabling requirement, a quantity, or the like of signal transmission lines 60. This is not specifically limited in this application. When the groove 70 is disposed on both the first mounting surface 141 and the second mounting surface 241, groove structures on the two mounting surfaces cooperate with each other to form the groove 70. Depth sizes of the groove structures on the two mounting surfaces are small, so that rigid strength of the housing 14 of the driver 10 and the housing 24 of the brake 20 can be ensured, and a phenomenon that disposing the groove 70 on a single mounting surface may affect rigid strength of the housing 14 of the driver 10 or the housing 24 of the brake 20 can be avoided.

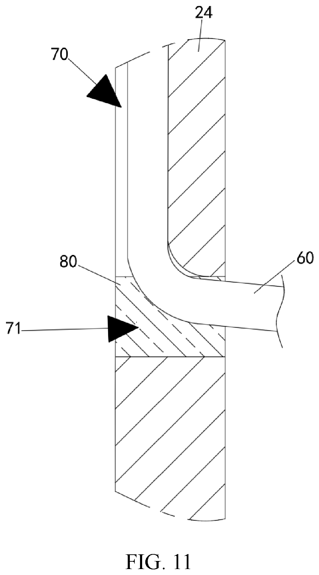

In an embodiment, refer to FIG. 11. FIG. 11 is a diagram of a cross-sectional structure of a sealing member 80 of the electro-mechanical brake apparatus 100 according to an embodiment of this application. The electro-mechanical brake apparatus 100 includes the sealing member 80, and the sealing member 80 is filled in a gap between the signal transmission line 60 and the inlet end 71 to seal the housing 14 of the driver 10 or the housing 24 of the brake 20. The sealing member 80 may be disposed to achieve sealing protection effect for the housing, that is, improve sealing protection effect of the housing 14 of the driver 10 or the housing 24 of the brake 20 on the internal functional structural members.

It should be noted that, in the diagram of FIG. 11, only an example in which the sealing member 80 is disposed between the signal transmission line 60 and the inlet end 71 is used for description, but the sealing member 80 is not limited to being disposed only in the gap between the signal transmission line 60 and the inlet end 71. In embodiments of this application, a specific disposition position, structural shape, and the like of the sealing member 80 may be adjusted based on an actual design requirement. This is not specifically limited in this application.

For example, in some possible embodiments, the sealing member 80 may alternatively be disposed at a remaining position of the groove 70, and is filled in a gap between an inner surface of the groove 70 and an outer surface of the signal transmission line 60. For example, the sealing member 80 may be disposed at a middle position between the inlet end 71 and the outlet end 72 of the groove 70, or the sealing member 80 may be disposed at a position of the outlet end 72 of the groove 70.

For example, in some possible embodiments, the sealing member 80 may alternatively be filled in the entire groove 70, to fill the gap between the signal transmission line 60 and the groove 70.

In the foregoing embodiments, a disposing position and a disposing manner of the sealing member 80 are not limited, and the sealing member 80 can always achieve sealing protection effect for the inside of the housing 14 of the driver 10 or the housing 24 of the brake 20.

Generally, a complex internal mechanical transmission structure and narrow internal space of the electro-mechanical brake apparatus are not conducive to a layout of the signal transmission line in the electro-mechanical brake apparatus.

However, in this application, the electro-mechanical brake apparatus 100 avoids the signal transmission line 60 by using the groove 70 between the housing 14 of the driver 10 and the housing 24 of the brake 20, so that the circuit component 50 accommodated in one of the housings may lead out the signal transmission line 60 through the gap between the two mounting surfaces. An extension distance of the signal transmission line 60 inside a housing of the electro-mechanical brake apparatus 100 is short. This facilitates arrangement of internal transmission components of the electro-mechanical brake apparatus 100 and reduces the overall size of the electro-mechanical brake apparatus 100. In addition, this facilitates arrangement and maintenance of the signal transmission line 60 outside the housing.

The vehicle 1000 in this application is braked by using the electro-mechanical brake apparatus 100 provided in any one of the foregoing embodiments of this application. In the electro-mechanical brake apparatus 100 provided in any one of the foregoing embodiments of this application, mounting surfaces of housings cooperate for cabling, to reduce the overall size. Therefore, the vehicle 1000 in this application can obtain larger internal space. In other words, because the vehicle 1000 in this application is equipped with the electro-mechanical brake apparatus 100 provided in any one of the foregoing embodiments, the vehicle 1000 in this application has all possible beneficial effect of the electro-mechanical brake apparatus 100 provided in any one of the foregoing embodiments.

Certainly, a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. An electro-mechanical brake apparatus whose mounting surfaces cooperate for cabling, wherein the electro-mechanical brake apparatus comprises a housing of a driver and a housing of a brake, the housing of the driver is configured to accommodate a transmission component of the driver, the housing of the brake is configured to accommodate a transmission component of the brake, the transmission component of the brake drives at least one friction plate, the housing of the driver and the housing of the brake each comprise a mounting surface, and the two mounting surfaces are fastened to each other;
each mounting surface comprises a through hole, the through hole is configured to avoid a transmission connecting member, and the transmission connecting member is configured to enable the transmission component of the driver to be in transmission connection to the transmission component of the brake; and
at least one mounting surface comprises at least one groove, the at least one groove is configured to avoid at least one signal transmission line, and the at least one signal transmission line is electrically connected to a circuit component accommodated in at least one of the housing of the driver or the housing of the brake.

2. The electro-mechanical brake apparatus according to claim 1, wherein the groove extends in a direction parallel to the mounting surface, and in the extension direction of the groove, the groove comprises an inlet end close to the through hole and an outlet end away from the through hole;
the inlet end communicates with the inside of the housing of the driver or the inside of the housing of the brake, and the signal transmission line extends into the groove through the inlet end; and
the outlet end is located at an edge of the mounting surface, and the signal transmission line extends out of the mounting surface through the outlet end.

3. The electro-mechanical brake apparatus according to claim 2, wherein the groove extends in a straight-line direction parallel to the mounting surface, and an extension line of a connection line from the outlet end of the groove to the inlet end of the groove passes through a circle center of the through hole.

4. The electro-mechanical brake apparatus according to claim 2, wherein the electro-mechanical brake apparatus comprises a sealing member, and the sealing member is filled in a gap between the signal transmission line and the inlet end to seal the housing of the driver or the housing of the brake.

5. The electro-mechanical brake apparatus according to claim 2, wherein there are two grooves, and the two grooves are symmetrically distributed in a vertical direction relative to a circle center of the through hole;
when the electro-mechanical brake apparatus is configured to brake a left wheel of a vehicle, the signal transmission line extends out of the mounting surface through one groove; and
when the electro-mechanical brake apparatus is configured to brake a right wheel of the vehicle, the signal transmission line extends out of the mounting surface through the other groove.

6. The electro-mechanical brake apparatus according to claim 5, wherein the housing of the driver is fastened to the housing of the brake through a pair of bolts;
the pair of bolts is symmetrically distributed in a radial direction relative to the circle center of the through hole; and
in a circumferential direction of the through hole, one of the pair of bolts is located between the two grooves.

7. The electro-mechanical brake apparatus according to claim 6, wherein one of the two mounting surfaces is provided with two pairs of bolt holes, the two pairs of bolt holes are symmetrically distributed in the vertical direction relative to the circle center of the through hole, and one pair of bolt holes is fastened to the pair of bolts;
when the electro-mechanical brake apparatus is configured to brake the left wheel of the vehicle, the pair of bolts is fastened to one pair of bolt holes; and
when the electro-mechanical brake apparatus is configured to brake the right wheel of the vehicle, the pair of bolts is fastened to the other pair of bolt holes.

8. The electro-mechanical brake apparatus according to any one of claims 1 to 7, wherein the housing of the brake is configured to accommodate the circuit component, the circuit component comprises a pressure sensor, and the pressure sensor is configured to: detect pressure generated when the transmission component of the brake drives the at least one friction plate, and transmit a pressure detection signal through the at least one signal transmission line.

9. The electro-mechanical brake apparatus according to claim 8, wherein
in a length direction of the transmission connecting member, the pressure sensor is arranged on a side that is of the transmission connecting member and that faces the mounting surface of the housing of the brake, and a side that is of the pressure sensor and that faces the mounting surface of the housing of the brake is electrically connected the at least one signal transmission line.

10. The electro-mechanical brake apparatus according to claim 8, wherein the driver comprises a circuit board, the housing of the driver is configured to accommodate the circuit board, the circuit board is configured to fasten a control circuit, and the control circuit is configured to receive a signal of the pressure sensor.

11. The electro-mechanical brake apparatus according to claim 10, wherein a thickness direction of the circuit board is perpendicular to the mounting surface of the housing of the driver, and the transmission component of the driver is arranged between the circuit board and the mounting surface of the housing of the driver.

12. The electro-mechanical brake apparatus according to any one of claims 1 to 7, wherein the driver comprises a brake motor, the housing of the driver is configured to accommodate the brake motor, and the brake motor is configured to drive the transmission component of the driver to rotate;
in a length direction of the transmission connecting member, the brake motor is located on a side that is of the transmission component of the driver and that faces the brake; and
in a radial direction of the transmission connecting member, the brake motor and the transmission component of the brake are disposed side by side.

13. The electro-mechanical brake apparatus according to claim 12, wherein the transmission component of the driver comprises an input shaft and an output shaft that are in transmission connection;
in the radial direction of the transmission connecting member, the input shaft and the output shaft are spaced from each other;
in an axial direction of the input shaft, the input shaft is coaxially transmitted with a motor shaft of the brake motor; and
in an axial direction of the output shaft, the output shaft is coaxially transmitted with the transmission connecting member.

14. The electro-mechanical brake apparatus according to claim 13, wherein the transmission connecting member and the output shaft are of an integrated structure; or the transmission connecting member and the transmission component of the brake are of an integrated structure.

15. A vehicle, comprising a wheel and the electro-mechanical brake apparatus according to any one of claims 1 to 14, wherein a length direction of a transmission connecting member in the electro-mechanical brake apparatus is parallel to a wheel shaft of the wheel.
